# EUROPÄISCHE PATENTSCHRIFT

(11) **EP 2 217 475 B1**
(45) Veröffentlichungstag und Bekanntmachung des Hinweises auf die Patenterteilung: **14.11.2012**
(21) Anmeldenummer: 08855061.1
(22) Anmeldetag: 26.11.2008
(51) Int. Cl.: B60T 7/10, H01H 9/16, H01H 47/00, H02J 13/00

(54) **VORRICHTUNG ZUM ELEKTRISCHEN BETÄTIGEN EINES SICHERHEITSKRITISCHEN SYSTEMS**
DEVICE FOR THE ELECTRIC ACTUATION OF A SAFETY-CRITICAL SYSTEM
DISPOSITIF POUR L'ACTIONNEMENT ÉLECTRIQUE D'UN SYSTÈME CRITIQUE POUR LA SÉCURITÉ

(30) Priorität: 26.11.2007 DE 102007057199
(43) Veröffentlichungstag der Anmeldung: 18.08.2010
(73) Patentinhaber: Lucas Automotive GmbH, 56070 Koblenz (DE)
(72) Erfinder: GRIESER-SCHMITZ, Stefan, 56070 Koblenz (DE); SCHEIDER, Werner, 56729 Monreal (DE)
(74) Vertreter: Schmidt, Steffen
(86) Internationale Anmeldenummer: PCT/EP2008/010029
(87) Internationale Veröffentlichungsnummer: WO 2009/068264

(56) Entgegenhaltungen:
- WO-A-00/29268
- WO-A-98/03963
- DE-A1- 19 962 556
- DE-A1-102006 009 729
- US-A- 5 473 203
- US-A- 5 714 852

## Beschreibung

Die Erfindung betrifft eine Vorrichtung zum elektrischen Betätigen eines sicherheitskritischen Systems für ein elektromechanisches Feststellbremssystem eines Kraftfahrzeugs, mit wenigstens zwei Anschlüssen, wenigstens zwei Schaltern, einem Bedienelement, mittels dem wenigstens zwei Betriebszustände für das System wählbar sind, durch die Schaltstellungen der wenigstens zwei Schalter bestimmt werden, wobei Stromrichtungselemente vorgesehen sind, so dass für wenigstens einen der wenigstens zwei Betriebszustände ein unidirektionaler, bidirektionaler oder kein Stromfluss zwischen den wenigstens zwei Anschlüssen erfolgt.

Im Stand der Technik ist eine derartige Vorrichtung aus der EP 1447 830 A1 bekannt. Zur sicheren drahtgebundenen Codierung von drei unterschiedlichen Schaltzuständen weist die bekannte Vorrichtung zwei Stufen von gekoppelt betätigbaren Schaltern auf, über die sechs Anschlussleitungen in drei verschiedene Verbindungsmuster geschaltet werden können. Die verschiedenen Aktionen bzw. Zuständen zugeordneten Verbindungsmuster unterscheiden sich in allen Verbindungspaaren der Anschlussleitungen, so dass jedes Verbindungsmuster bereits anhand eines korrekten Verbindungspaares identifiziert werden kann.

Weiterhin ist eine derartige Vorrichtung aus der DE 199 62 556 A1 bekannt. Auch bei dieser Vorrichtung erfolgt der elektrische Anschluss über sechs Schaltleitungen, über die drei unterschiedliche Schaltzustände abgefragt werden können. Allerdings weist diese Vorrichtung gegenüber der aus der EP 1 447 830 A1 bekannten Vorrichtung zusätzlich eine Beschaltung mit Stromrichtungselementen auf, so dass sich für jeden Schaltzustand ein unidirektionaler Stromfluss zwischen den Anschlüssen ergibt.

Von Nachteil ist, dass die Herstellung und der Einsatz der bekannten Vorrichtung einen hohen technischen und damit wirtschaftlichen Aufwand erfordern. Dies vor allem, weil erstens zum Schalten der drei verschiedenen Verbindungsmuster insgesamt sechs Schalter gekoppelt sowie betätigt werden müssen; zweitens zum Verbinden mit einer elektronischen Steuereinheit insgesamt sechs elektrische Anschlüsse vorgesehen und insgesamt sechs elektrische Leitungen verlegt werden müssen; drittens zum sicheren Abfragen der Verbindungsmuster für die elektronische Steuereinheit aufgrund der insgesamt sechs elektrischen Anschlüsse ein entsprechend hoher Schaltungs- bzw. Softwareaufwand betrieben werden muss.

Im Stand der Technik ist ebenso eine derartige Vorrichtung aus der US-Patentschrift 5,473,203 bekannt. Diese offenbart eine Druckschaltervorrichtung mit einem ersten und einem zweiten Druckschalter und mindestens einer Gleichrichterdiode. Bei dieser Druckschaltervorrichtung werden über zwei Druckschalter mindestens zwei verschiedene Schaltstellungen realisiert.

Von daher liegt der Erfindung die Aufgabe zugrunde, eine eingangs beschriebene Vorrichtung zum elektrischen Betätigen eines sicherheitskritischen Systems weiterzuentwickeln, die hinsichtlich vorgenannter Nachteile verbessert ist und eine hohe Redundanz und Fehlertoleranz aufweist.

Dazu wird für eine eingangs beschriebene Vorrichtung zum elektrischen Betätigen eines sicherheitskritischen Systems vorgeschlagen, dass der unidirektionale Stromfluss zwischen den wenigstens zwei Anschlüssen für einen Betriebszustand in Richtung vom ersten zum zweiten Anschluss erfolgt und für einen weiteren Betriebszustand in umgekehrter Richtung vom zweiten zum ersten Anschluss erfolgt, und ein bidirektionaler oder kein Stromfluss zwischen den wenigstens zwei Anschlüssen für einen weiteren Betriebszustand erfolgt.

Der unidirektionale Stromfluss zwischen den wenigstens zwei Anschlüssen erfolgt für einen Betriebszustand in Richtung vom ersten zum zweiten Anschluss oder umgekehrt und für einen weiteren Betriebszustand erfolgt ein bidirektionaler oder kein Stromfluss zwischen den wenigstens zwei Anschlüssen.

Die Erfindung zeichnet sich durch den Vorteil aus, dass die mittels des Bedienelementes gewählten Betriebszustände anhand unterschiedlicher Potentiale, die sich an den Anschlüssen einstellen, sicher und zuverlässig ermittelt bzw. erkannt werden können. Denn durch wenigstens ein Stromrichtungselement wird für wenigstens einen Betriebszustand ein unidirektionaler Stromfluss zwischen den wenigstens zwei Anschlüssen bewirkt, infolge dessen sich für jeden Betriebszustand an den wenigstens zwei Anschlüssen unterschiedliche Potentiale einstellen.

Die Schalter weisen wenigstens zwei Schaltstellungen auf, wobei in jeder Schaltstellung entweder ein unidirektionaler oder ein bidirektionaler Stromfluss zwischen den wenigstens zwei Anschlüssen erfolgt. Dadurch wird erreicht, dass sich ausschließlich definierte Potentiale an den wenigstens zwei Anschlüssen einstellen können, die also vorherbestimmt sind, um präzise ermittelt bzw. erkannt werden zu können.

Weiterhin sind die wenigstens zwei Schalter hintereinander geschaltet sein. Gedankenspiel: Angenommen es werden zwei Schalter, die jeweils zwei Schaltstellungen aufweisen, hintereinander geschaltet, und es werden zwei Stromrichtungselemente vorgesehen, so können zwischen zwei Anschlüssen ein bidirektionaler sowie zwei gegensinnige unidirektionale Stromflüsse erfolgen, anhand der bereits drei Betriebszustände genau unterschieden werden.

Wird zur weiteren Erhöhung der Systemsicherheit der wenigstens eine Schalter wenigstens einfach redundant ausgeführt, so entsteht - vorheriges Gedankenspiel fortgeführt - eine erfindungsgemäße Vorrichtung, die redundant aufgebaut ist, dabei vier Anschlüsse, vier Schalter und vier Stromrichtungselemente umfasst, und drei Betriebszustände unterscheiden kann. Dies macht den großen Vorteil, den eine erfindungsgemäße Vorrichtung gegenüber den aus der EP 1447 830 A1 sowie DE 199 62 556 A1 bekannten Vorrichtungen bietet, ganz besonders deutlich.

Des Weiteren betrifft die Erfindung ein sicherheitskritisches System, für ein elektromechanisches Feststellbremssystem für ein Kraftfahrzeug, zu dessen elektrischen Betätigen eine erfindungsgemäße Vorrichtung vorgesehen ist. Dabei sind die wenigstens zwei Anschlüsse der erfindungsgemäßen Vorrichtung mit einer elektronischen Steuereinheit elektrisch verbunden, die eine dem an dem Bedienelement gewählten Betriebszustand entsprechende Steuerung bzw. Regelung des Systems vornimmt.

Das System umfasst einen Auswerteschaltkreis, der an den wenigstens zwei Anschlüssen ein vorherbestimmtes Potential einstellt, um die sich infolge dessen an den wenigstens zwei Anschlüssen ergebenden Potentiale auszuwerten.

In bevorzugter Weise findet das Einstellen eines vorherbestimmten Potentials an den wenigstens zwei Anschlüssen in einem vorherbestimmten Zyklus statt.

Das Auswerten der sich an den wenigstens zwei Anschlüssen ergebenden Potentiale erfolgt dahingehend, ob eine Übereinstimmung mit dem an dem Bedienelement gewählten Betriebszustand besteht, um gegebenenfalls eine Fehlererkennung, Fehlerauswertung sowie Fehlerüberwachung durchführen zu können.

Nachfolgend wird die Erfindung anhand der Zeichnungen näher erläutert. Es zeigen:
- Fig. 1a bis 1d: ein erstes Ausführungsbeispiel einer erfindungsgemäßen Vorrichtung,
- Fig. 2: schematisch ein sicherheitskritisches System mit einer erfindungsgemäßen Vorrichtung gemäß Fig. 1a bis 1d,
- Fig. 3: schematisch den Aufbau eines Auswerteschaltkreises für ein sicherheitskritisches System gemäß Fig. 2,
- Fig. 4a bis 4c: Auswertetabellen für Betriebszustände eines sicherheitskritischen Systems gemäß Fig. 2,
- Fig. 5a bis 5d: ein zweites Ausführungsbeispiel einer erfindungsgemäßen Vorrichtung,
- Fig. 6a bis 6d: ein drittes Ausführungsbeispiel einer erfindungsgemäßen Vorrichtung.
- Fig. 7: eine Möglichkeit zur Realisierung einer Aktivierungs-("Wake-up")-Funktion bei einer erfindungsgemäßen Vorrichtung.

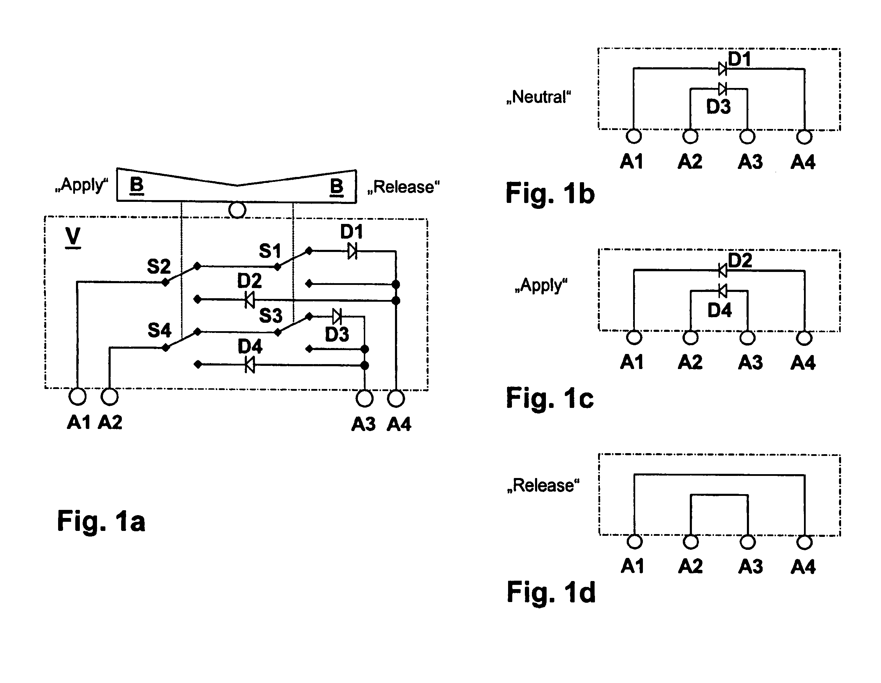

Für ein erstes Ausführungsbeispiel einer erfindungsgemäßen Vorrichtung V zum elektrischen Betätigen eines sicherheitskritischen Systems gemäß Fig. 1a werden zunächst zwei Anschlüsse A1 und A4 betrachtet. Zum elektrischen Verbinden der Anschlüsse A1 und A4 sind zwei Schalter S1 und S2 in Hintereinanderschaltung vorgesehen, die jeweils zwei Schaltstellungen aufweisen. Um die Schaltstellungen der beiden Schalter S1 und S2 zu bestimmen, sind die beiden Schalter S1 und S2 mit einem Bedienelement B betrieblich gekoppelt, durch das die folgenden drei Betriebszustände für das System wählbar sind:
(i.) Für einen ersten Betriebszustand befinden sich die beiden Schalter S1 und S2, wie in Fig. 1a dargestellt, in ihrer oberen Schaltstellung, so dass eine elektrische Verbindung über ein Stromrichtungselement D1 (z.B. Diode) besteht, das einen unidirektionalen Stromfluss nur in Richtung vom Anschluss A1 zum Anschluss A4 zulässt und einen Stromfluss in Richtung vom Anschluss A4 zum Anschluss A1 sperrt.
(ii.) Für einen zweiten Betriebszustand befindet sich der Schalter S2 in seiner unteren Schaltstellung, so dass unabhängig von der Schaltstellung, in der sich der Schalter S1 befindet, eine elektrische Verbindung über ein Stromrichtungselement D2 (z.B. Diode) besteht, das einen unidirektionalen Stromfluss nur in Richtung vom Anschluss A4 zum Anschluss A1 zulässt und einen Stromfluss in Richtung vom Anschluss A1 zum Anschluss A4 sperrt.
(iii.) Für einen dritten Betriebszustand befindet sich der Schalter S2 in seiner oberen Schaltstellung und der Schalter S1 in seiner unteren Schaltstellung, so dass eine unmittelbare elektrische Verbindung zwischen den Anschlüssen A1 und A4 besteht, die einen bidirektionalen Stromfluss, also sowohl in Richtung vom Anschluss A4 zum Anschluss A1, als auch in Richtung vom Anschluss A1 zum Anschluss A4, zulässt.

Weiterhin weist die erfindungsgemäße Vorrichtung V gemäß Fig. 1a zwei Anschlüsse A2 und A3 auf, zu deren elektrischem Verbinden zwei Schalter S3 und S4 sowie zwei Stromrichtungselemente D3 und D4 (z.B. Dioden) vorgesehen sind. Die zwischen den Anschlüssen A2 und A3 verschalteten Komponenten S3, S4 sowie D3, D4 sind nicht nur identisch zu den zwischen den Anschlüssen A1 und A4 verschalteten Komponenten S1, S2 sowie D1, D2, sondern auch in der gleichen Weise verschaltet, wie in Fig. 1a dargestellt. Auch sind die Schalter S3 und S4 mit dem Bedienelement B in der Weise betrieblich gekoppelt, dass der Schalter S3 parallel mit dem Schalter S1 und der Schalter S4 parallel mit dem Schalter S2 geschaltet wird.

Insgesamt betrachtet zeichnet sich die erfindungsgemäße Vorrichtung V gemäß Fig. 1a also durch einen einfach redundanten Aufbau aus, durch den drei unterschiedliche Betriebszustände für ein sicherheitskritisches System über nur vier Anschlüsse A1, A2, A3 und A4 wählbar sind.

Fig. 1b bis 1d zeigen jeweils ein Ersatzschaltbild für die drei Betriebszustände, die für die erfindungsgemäße Vorrichtung gemäß Fig. 1a wählbar sind, und zwar:
(i.) Fig. 1b zeigt den als "Neutral" bezeichneten ersten Betriebszustand, der über die Stromrichtungselemente D1 bzw. D3 nur einen unidirektionalen Stromfluss in Richtung vom Anschluss A1 zum Anschluss A4 bzw. vom Anschluss A2 zum Anschluss A3 zulässt.
(ii.) Fig. 1c zeigt den als "Apply" bezeichneten zweiten Betriebszustand, der über die Stromrichtungselemente D2 bzw. D4 nur einen unidirektionalen Stromfluss in Richtung vom Anschluss A4 zum Anschluss A1 bzw. vom Anschluss A3 zum Anschluss A2 zulässt.
(iii.) Fig. 1d zeigt den als "Release" bezeichneten dritten Betriebszustand, der einen bidirektionalen Stromfluss zwischen den Anschlüssen A1 und A4 bzw. den Anschlüssen A2 und A3 zulässt.

Als sicherheitskritisches System für eine mögliche Verwendung der erfindungsgemäßen Vorrichtung V ist ein elektromechanisches Park- bzw. Feststellbremssystem (EPB) für ein Kraftfahrzeug zu erwähnen. Da ein Fahrer die Betätigung des EPB anstelle mittels eines mechanischen Handbremshebels mittels einer elektrischen Schaltvorrichtung vornimmt, ist es unabdingbar, nicht nur die Schaltvorrichtung selbst, sondern vor allem die von ihren Anschlüssen abgehenden elektrischen Leitungen auf Fehler, wie z.B. Unterbrechung oder Kurzschluss, ständig zu überwachen.

Für ein EPB könnte z.B. ein Kipptaster als Bedienelement B verwendet werden, der z.B. unter Wirkung einer Federanordnung seine in Fig. 1a dargestellte Grundstellung einnimmt, die dem ersten Betriebszustand "Neutral" entspricht. Wird das Bedienelement B ausgehend von seiner Grundstellung auf seiner linken Seite betätigt, so entspricht dies dem zweiten Betriebszustand "Apply", der z.B. eine Aktivierung des EPB bedeuten kann. Wird das Bedienelement B ausgehend von seiner Grundstellung auf seiner rechten Seite betätigt, so entspricht dies dem dritten Betriebszustand "Release", der z.B. ein Lösen des EPB bedeuten kann.

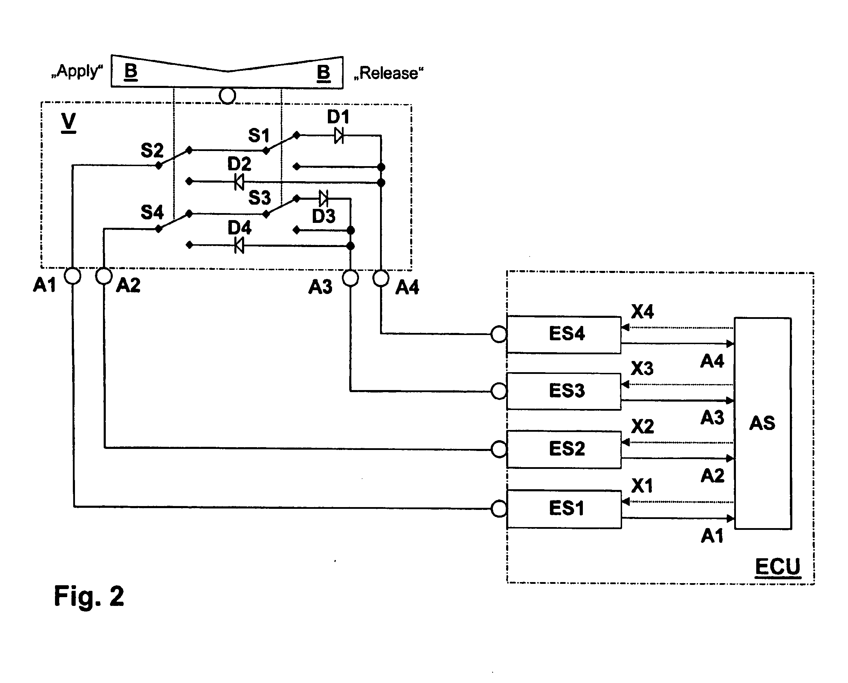

In Fig. 2 ist ein sicherheitskritisches System mit einer erfindungsgemäßen Vorrichtung V gemäß Fig. 1a bis 1d schematisch dargestellt. Dabei sind die vier Anschlüsse A1, A2, A3 und A4 über nicht näher bezeichnete Leitungen mit einer elektronischen Steuereinheit (ECU) elektrisch verbunden. Die ECU wertet mittels eines Auswerteschaltkreises AS die von der erfindungsgemäßen Vorrichtung V an den Anschlüssen A1, A2, A3 und A4 abgegebenen Signale aus, um einen an dem Bedienelement B gewählten Betriebszustand zu erkennen, und eine dem Betriebszustand entsprechende Steuerung bzw. Regelung des Systems vorzunehmen. Das System umfasst neben dem Auswerteschaltkreis AS weiterhin Eingangsschaltkreise ES1, ES2, ES3 und ES4, die vorzugsweise, wie in Fig. 2 schematisch dargestellt, Bestandteil der ECU sind. Der Auswerteschaltkreis AS ist den Eingangsschaltkreisen ES1, ES2, ES3 und ES4 übergeordnet und stellt für diese jeweils Steuersignale X1, X2, X3 und X4 bereit.

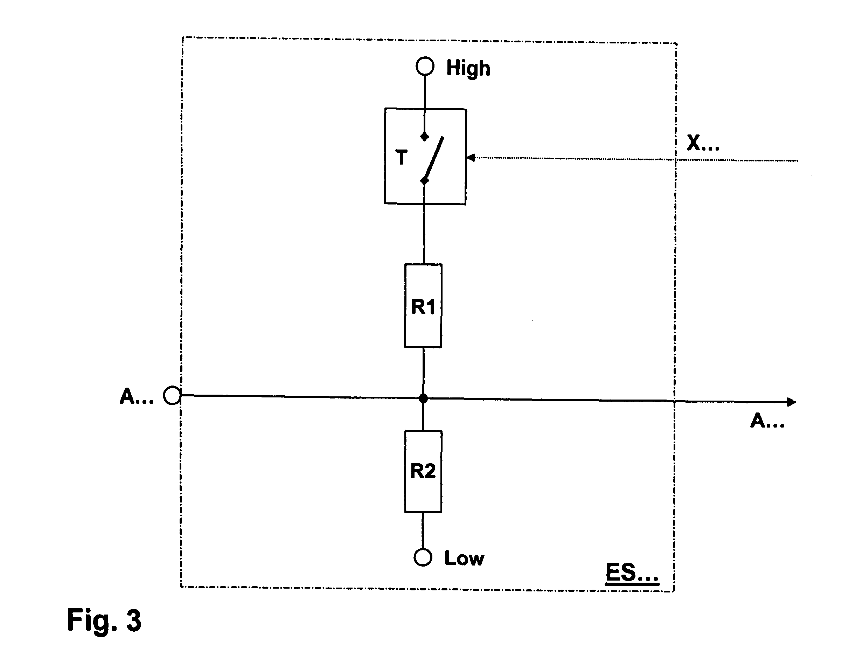

Jedem der Anschlüsse A1, A2, A3 und A4 ist ein Eingangsschaltkreis ES1, ES2, ES3 und ES4 zugeordnet. Die Eingangsschaltkreise ES1, ES2, ES3 und ES4 weisen jeweils einen identischen Aufbau auf, den Fig. 3 anhand eines Eingangsschaltkreises ES..., der einem Anschluss A... zugeordnet ist, schematisch zeigt.

Ein Eingangsschaltkreis ES... ist dazu eingerichtet für den ihm zugeordneten Anschluss A... ein vorherbestimmtes Potential, entweder "Low" oder "High" einzustellen. Dies erfolgt mittels des ihm von dem Auswerteschaltkreis AS bereitgestellten Steuersignals X..., das ein elektronisches Schaltelement T (z.B. Transistor oder Relais) steuert. Hat das Steuersignal X... den Status "On", so nimmt das elektronische Schaltelement T seinen geschlossenen Zustand ein, in dem der Anschluss A... über ein niederohmiges Widerstandselement R1 mit "High", d.h. einem positiven Potential, z.B. der Versorgungsspannung der ECU, verbunden ist; hat dagegen das Steuersignal X... den Status "Off", so nimmt das elektronische Schaltelement T seinen gesperrten Zustand ein, in dem der Anschluss A... über ein hochohmiges Widerstandselement R2 mit "Low", d.h. einem negativen Potential oder Null, z.B. Masse, verbunden ist.

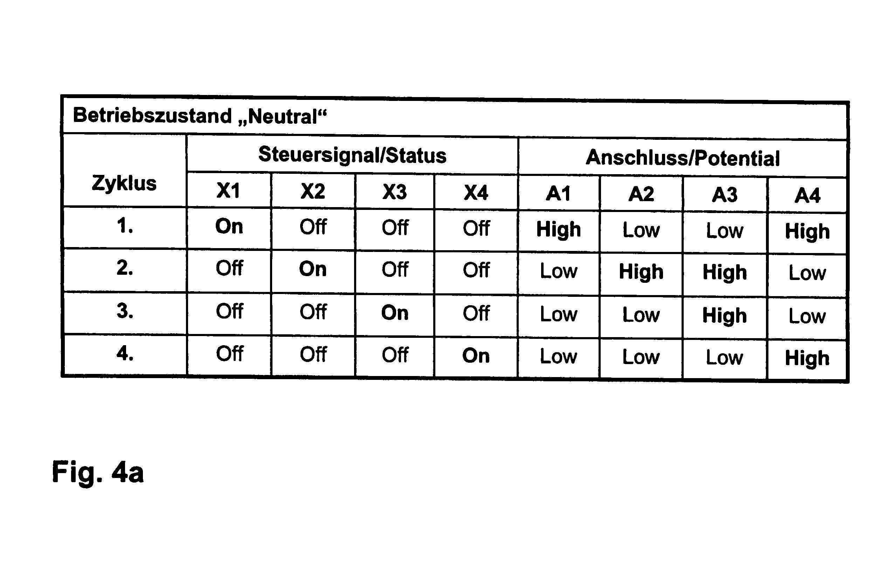

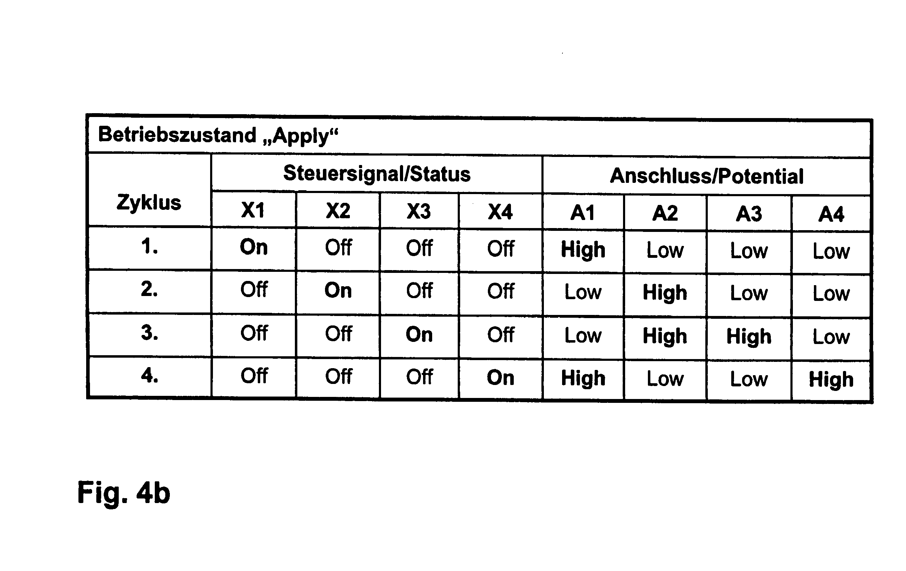

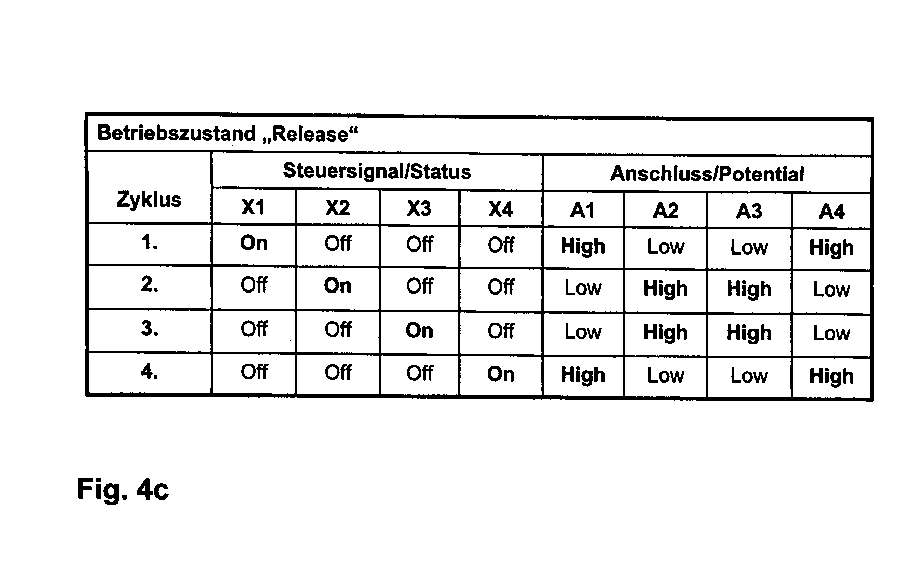

Das Einstellen eines vorherbestimmten Potentials an jedem der Anschlüsse A1, A2, A3 und A4 findet zyklisch statt. Dazu gibt der Auswerteschaltkreis AS pro Zyklus ein vorherbestimmtes Muster von Steuersignalen X1, X2, X3 und X4 aus. Daraufhin wertet der Auswerteschaltkreis AS noch im gleichen Zyklus die an den Anschlüssen A1, A2, A3 und A4 abgegebenen Signale aus und speichert diese ab, bevor mit dem nächsten Zyklus fort gefahren wird. Dann, wenn alle für die Ermittlung eines Betriebszustandes zu durchlaufenden Zyklen abgearbeitet sind, erfolgt deren gemeinsame Auswertung, um den an dem Bedienelement B gewählten Betriebszustand zu erkennen. Ein guter Kompromiss zwischen hoher Sicherheit einerseits und hoher Auswertegeschwindigkeit andererseits ergibt sich, wenn pro Zyklus immer nur an einem der Anschlüsse A1, A2, A3 oder A4 das Potential "High" eingestellt wird, während die dann anderen Anschlüsse auf dem Potential "Low" verbleiben. In diesem Fall, also bei einer erfindungsgemäßen Vorrichtung V mit vier Anschlüssen A1, A2, A3 und A4, sind zur Erkennung des Betriebszustandes genau vier Zyklen abzuarbeiten und anschließend auszuwerten, wie sich anhand der Auswertetabellen nach Fig. 4a bis 4c ergibt. Im Einzelnen:
(i.) Fig. 4a zeigt die Auswertetabelle zur Erkennung des Betriebszustandes "Neutral". Es werden vier Zyklen abgearbeitet, wobei pro Zyklus immer nur ein Steuersignal mit dem Status "On" - hier in der Reihenfolge X1, X2, X3, X4 - ausgegeben wird. Dem entsprechend stellt sich pro Zyklus an dem zugeordneten Anschluss das Potential "High" - hier in der Reihenfolge A1, A2, A3, A4 - ein. Darüber hinaus stellt sich im ersten Zyklus am Anschluss A4 und im zweiten Zyklus am Anschluss A3 jeweils das Potential "High" ein. Dies, weil (gemäß Fig. 1b) im ersten Zyklus das Stromrichtungselement D1 einen Stromfluss vom Anschluss A4 zum Anschluss A1 sperrt und im zweiten Zyklus das Stromrichtungselement D3 einen Stromfluss vom Anschluss A3 zum Anschluss A2 sperrt.
(ii.) Fig. 4b zeigt die Auswertetabelle zur Erkennung des Betriebszustandes "Apply". Es werden vier Zyklen abgearbeitet, wobei pro Zyklus immer nur ein Steuersignal mit dem Status "On" - hier in der Reihenfolge X1, X2, X3, X4 - ausgegeben wird. Dem entsprechend stellt sich pro Zyklus an dem zugeordneten Anschluss das Potential "High" - hier in der Reihenfolge A1, A2, A3, A4 - ein. Darüber hinaus stellt sich im dritten Zyklus am Anschluss A2 und im vierten Zyklus am Anschluss A1 jeweils das Potential "High" ein. Dies, weil (gemäß Fig. 1c) im dritten Zyklus das Stromrichtungselement D4 einen Stromfluss vom Anschluss A2 zum Anschluss A3 sperrt und im vierten Zyklus das Stromrichtungselement D2 einen Stromfluss vom Anschluss A1 zum Anschluss A4 sperrt.
(iii.) Fig. 4c zeigt die Auswertetabelle zur Erkennung des Betriebszustandes "Release". Es werden vier Zyklen abgearbeitet, wobei pro Zyklus immer nur ein Steuersignal mit dem Status "On" - hier in der Reihenfolge X1, X2, X3, X4 - ausgegeben wird. Dem entsprechend stellt sich pro Zyklus an dem zugeordneten Anschluss das Potential "High" - hier in der Reihenfolge A1, A2, A3, A4 - ein. Darüber hinaus stellt sich im ersten Zyklus am Anschluss A4, im zweiten Zyklus am Anschluss A3, im dritten Zyklus am Anschluss A2 und im vierten Zyklus am Anschluss A1 jeweils das Potential "High" ein. Dies, weil (gemäß Fig. 1d) kein Stromrichtungselement zwischen den Anschlüssen A1 und A4 sowie den Anschlüssen A2 und A3 wirkt.

Treten Abweichungen von den für die Anschlüsse A1, A2, A3 und A4 in den Auswertetabellen angegebenen Potentialen "Low"/"High" auf, so kann anhand dieser innerhalb der ECU eine genaue Fehlererkennung, Fehlerauswertung sowie Fehlerüberwachung durchgeführt werden. Hierfür werden einige Beispiele anhand der Auswertetabelle zur Erkennung des Betriebszustandes "Neutral" nach Fig. 4a betrachtet:
Der Fehler "Anschluss A1 kurzgeschlossen nach Masse" wird erkannt, wenn sich im ersten Zyklus an den Anschlüssen A1 und A4 jeweils das Potential "Low" und nicht "High" einstellt; der Fehler "Anschluss A4 kurzgeschlossen nach Masse" wird erkannt, wenn sich im vierten Zyklus am Anschluss A4 das Potential "Low" und nicht "High" einstellt; der Fehler "Anschluss A1 kurzgeschlossen nach Versorgungsspannung" wird erkannt, wenn sich im zweiten Zyklus an den Anschlüssen A1 und A4 jeweils das Potential "High" und nicht "Low" einstellt; der Fehler "Anschluss A4 kurzgeschlossen nach Versorgungsspannung" wird erkannt, wenn sich im vierten Zyklus am Anschluss A4 das Potential "High" und nicht "Low" einstellt.

Die ECU kann in Abhängigkeit der Ergebnisse der Fehlerüberwachung geeignete Maßnahmen einleiten, wie z.B. Ausgabe akustischer und/oder optischer und/oder haptischer Warnungen - bei einem EPB an den Fahrer -, Überleitung des sicherkritischen Systems in einen definierten sicheren Betriebszustand, Speicherung der erkannten Fehler für Diagnose- bzw. Werkstattzwecke. Dafür sind in idealer Weise die einzelnen Schaltkreise in der ECU nicht nur als Hardware ausgeführt, sondern die ECU umfasst in heute üblicher Weise Mikrocomputer, auf denen die vorgesehenen Funktionen als Software implementiert werden können. Darüber hinaus kann vorgesehen sein, dass die ECU auch mit elektronischen Steuereinheiten anderer Systeme kommuniziert, z.B. im Fall eines EPB mit dem elektronisch gesteuerten Betriebsbremssystem des Kraftfahrzeugs.

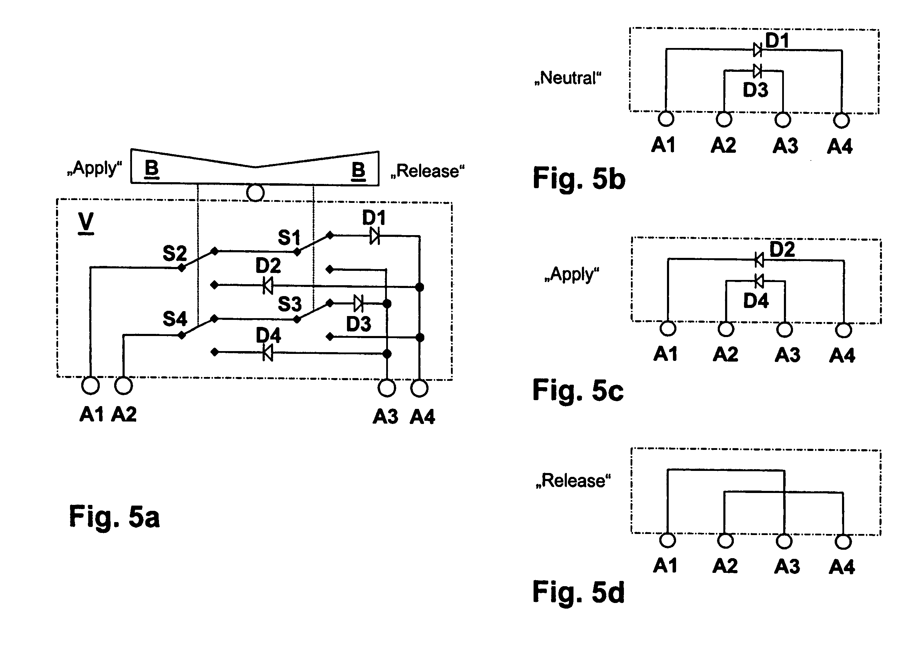

Fig. 5a zeigt ein zweites Ausführungsbeispiel einer erfindungsgemäßen Vorrichtung V, für die zunächst drei Anschlüsse A1, A3 und A4 betrachtet werden. Zum elektrischen Verbinden der Anschlüsse A1 und A4 bzw. A3 sind zwei Schalter S1 und S2 vorgesehen, die jeweils zwei Schaltstellungen aufweisen. Um die Schaltstellungen der beiden Schalter S1 und S2 zu bestimmen, sind die beiden Schalter S1 und S2 mit einem Bedienelement B betrieblich gekoppelt, durch das die folgenden drei Betriebszustände für das System wählbar sind:
(i.) Für einen ersten Betriebszustand befinden sich die beiden Schalter S1 und S2, wie in Fig. 5a dargestellt, in ihrer oberen Schaltstellung, so dass eine elektrische Verbindung über ein Stromrichtungselement D1 besteht, das einen unidirektionalen Stromfluss nur in Richtung vom Anschluss A1 zum Anschluss A4 zulässt und einen Stromfluss in Richtung vom Anschluss A4 zum Anschluss A1 sperrt.
(ii.) Für einen zweiten Betriebszustand befindet sich der Schalter S2 in seiner unteren Schaltstellung, so dass unabhängig von der Schaltstellung, in der sich der Schalter S1 befindet, eine elektrische Verbindung über ein Stromrichtungselement D2 besteht, das einen unidirektionalen Stromfluss nur in Richtung vom Anschluss A4 zum Anschluss A1 zulässt und einen Stromfluss in Richtung vom Anschluss A1 zum Anschluss A4 sperrt.
(iii.) Für einen dritten Betriebszustand befindet sich der Schalter S2 in seiner oberen Schaltstellung und der Schalter S1 in seiner unteren Schaltstellung, so dass eine unmittelbare elektrische Verbindung zwischen den Anschlüssen A1 und A3 besteht, die einen bidirektionalen Stromfluss, also sowohl in Richtung vom Anschluss A3 zum Anschluss A1, als auch in Richtung vom Anschluss A1 zum Anschluss A3, zulässt.

Weiterhin weist die erfindungsgemäße Vorrichtung V gemäß Fig. 5a einen Anschluss A2 auf, zu dessen elektrischem Verbinden mit dem Anschluss A3 bzw. A4 zwei Schalter S3 und S4 sowie zwei Stromrichtungselemente D3 und D4 vorgesehen sind, wie in Fig. 5a dargestellt. Die Schalter S3 und S4 sind mit dem Bedienelement B in der Weise betrieblich gekoppelt, dass der Schalter S3 parallel mit dem Schalter S1 und der Schalter S4 parallel mit dem Schalter S2 geschaltet wird. Damit zeichnet sich auch die erfindungsgemäße Vorrichtung V gemäß Fig. 5a durch einen einfach redundanten Aufbau aus, durch den drei unterschiedliche Betriebszustände für ein sicherheitskritisches System über nur vier Anschlüsse A1, A2, A3 und A4 wählbar sind.

Fig. 5b bis 5d zeigen jeweils ein Ersatzschaltbild für die drei Betriebszustände, die für die erfindungsgemäße Vorrichtung gemäß Fig. 5a wählbar sind, und zwar:
(i.) Fig. 5b zeigt den als "Neutral" bezeichneten ersten Betriebszustand, der über die Stromrichtungselemente D1 bzw. D3 nur einen unidirektionalen Stromfluss in Richtung vom Anschluss A1 zum Anschluss A4 bzw. vom Anschluss A2 zum Anschluss A3 zulässt.
(ii.) Fig. 5c zeigt den als "Apply" bezeichneten zweiten Betriebszustand, der über die Stromrichtungselemente D2 bzw. D4 nur einen unidirektionalen Stromfluss in Richtung vom Anschluss A4 zum Anschluss A1 bzw. vom Anschluss A3 zum Anschluss A2 zulässt.
(iii.) Fig. 5d zeigt den als "Release" bezeichneten dritten Betriebszustand, der einen bidirektionalen Stromfluss zwischen den Anschlüssen A1 und A3 bzw. den Anschlüssen A2 und A4 zulässt.

Der Unterschied zum ersten Ausführungsbeispiel nach Fig. 1a bis 1d besteht also darin, dass für den als "Release" bezeichneten dritten Betriebszustand gegenüber den anderen beiden Betriebszuständen die Anschlüsse A1, A2, A3 und A4 in der Weise überkreuzt sind, dass A1 mit A3 und A2 mit A4 verbunden ist. Durch die so hergestellte Kopplung unter den Betriebszuständen wird eine verbesserte Fehlerüberwachung des Betriebszustandes "Release" ermöglicht.

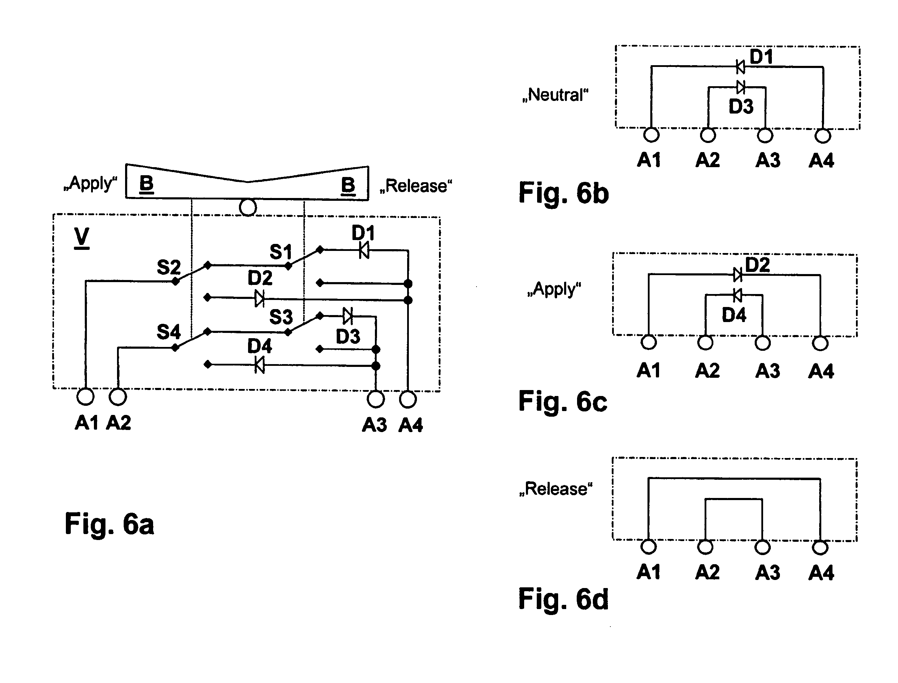

In Fig. 6a ist ein drittes Ausführungsbeispiel einer erfindungsgemäßen Vorrichtung V gezeigt, für die zunächst zwei Anschlüsse A1 und A4 betrachtet werden. Zum elektrischen Verbinden der Anschlüsse A1 und A4 sind zwei Schalter S1 und S2 vorgesehen, die jeweils zwei Schaltstellungen aufweisen. Um die Schaltstellungen der beiden Schalter S1 und S2 zu bestimmen, sind die beiden Schalter S1 und S2 mit einem Bedienelement B betrieblich gekoppelt, durch das die folgenden drei Betriebszustände für das System wählbar sind:
(i.) Für einen ersten Betriebszustand befinden sich die beiden Schalter S1 und S2, wie in Fig. 6a dargestellt, in ihrer oberen Schaltstellung, so dass eine elektrische Verbindung über ein Stromrichtungselement D1 besteht, das einen unidirektionalen Stromfluss nur in Richtung vom Anschluss A4 zum Anschluss A1 zulässt und einen Stromfluss in Richtung vom Anschluss A1 zum Anschluss A4 sperrt.
(ii.) Für einen zweiten Betriebszustand befindet sich der Schalter S2 in seiner unteren Schaltstellung, so dass unabhängig von der Schaltstellung, in der sich der Schalter S1 befindet, eine elektrische Verbindung über ein Stromrichtungselement D2 besteht, das einen unidirektionalen Stromfluss nur in Richtung vom Anschluss A1 zum Anschluss A4 zulässt und einen Stromfluss in Richtung vom Anschluss A4 zum Anschluss A1 sperrt.
(iii.) Für einen dritten Betriebszustand befindet sich der Schalter S2 in seiner oberen Schaltstellung und der Schalter S1 in seiner unteren Schaltstellung, so dass eine unmittelbare elektrische Verbindung zwischen den Anschlüssen A1 und A4 besteht, die einen bidirektionalen Stromfluss, also sowohl in Richtung vom Anschluss A4 zum Anschluss A1, als auch in Richtung vom Anschluss A1 zum Anschluss A4, zulässt.

Weiterhin weist die erfindungsgemäße Vorrichtung V gemäß Fig. 6a zwei Anschlüsse A2 und A3 auf, zu deren elektrischem Verbinden zwei Schalter S3 und S4 sowie zwei Stromrichtungselemente D3 und D4 vorgesehen sind. Die zwischen den Anschlüssen A2 und A3 verschalteten Komponenten S3, S4 sowie D3, D4 sind nicht nur identisch zu den zwischen den Anschlüssen A1 und A4 verschalteten Komponenten S1, S2 sowie D1, D2, sondern auch in der gleichen Weise verschaltet, wie in Fig. 6a dargestellt. Auch sind die Schalter S3 und S4 mit dem Bedienelement B in der Weise betrieblich gekoppelt, dass der Schalter S3 parallel mit dem Schalter S1 und der Schalter S4 parallel mit dem Schalter S2 geschaltet wird.

Insgesamt betrachtet zeichnet sich die erfindungsgemäße Vorrichtung V gemäß Fig. 6a also durch einen einfach redundanten Aufbau aus, durch den drei unterschiedliche Betriebszustände für ein sicherheitskritisches System über nur vier Anschlüsse A1, A2, A3 und A4 wählbar sind.

Fig. 6b bis 6d zeigen jeweils ein Ersatzschaltbild für die drei Betriebszustände, die für die erfindungsgemäße Vorrichtung gemäß Fig. 6a wählbar sind, und zwar:
(i.) Fig. 6b zeigt den als "Neutral" bezeichneten ersten Betriebszustand, der über die Stromrichtungselemente D1 bzw. D3 nur einen unidirektionalen Stromfluss in Richtung vom Anschluss A4 zum Anschluss A1 bzw. vom Anschluss A2 zum Anschluss A3 zulässt.
(ii.) Fig. 6c zeigt den als "Apply" bezeichneten zweiten Betriebszustand, der über die Stromrichtungselemente D2 bzw. D4 nur einen unidirektionalen Stromfluss in Richtung vom Anschluss A1 zum Anschluss A4 bzw. vom Anschluss A3 zum Anschluss A2 zulässt.
(iii.) Fig. 6d zeigt den als "Release" bezeichneten dritten Betriebszustand, der einen bidirektionalen Stromfluss zwischen den Anschlüssen A1 und A4 bzw. den Anschlüssen A2 und A3 zulässt.

Der Unterschied zum ersten Ausführungsbeispiel nach Fig. 1a bis 1d besteht also darin, dass die Stromrichtungselemente D1 und D2 antiparallel zueinander angeordnet sind, wodurch eine Entkopplung unter den Betriebszuständen erreicht wird.

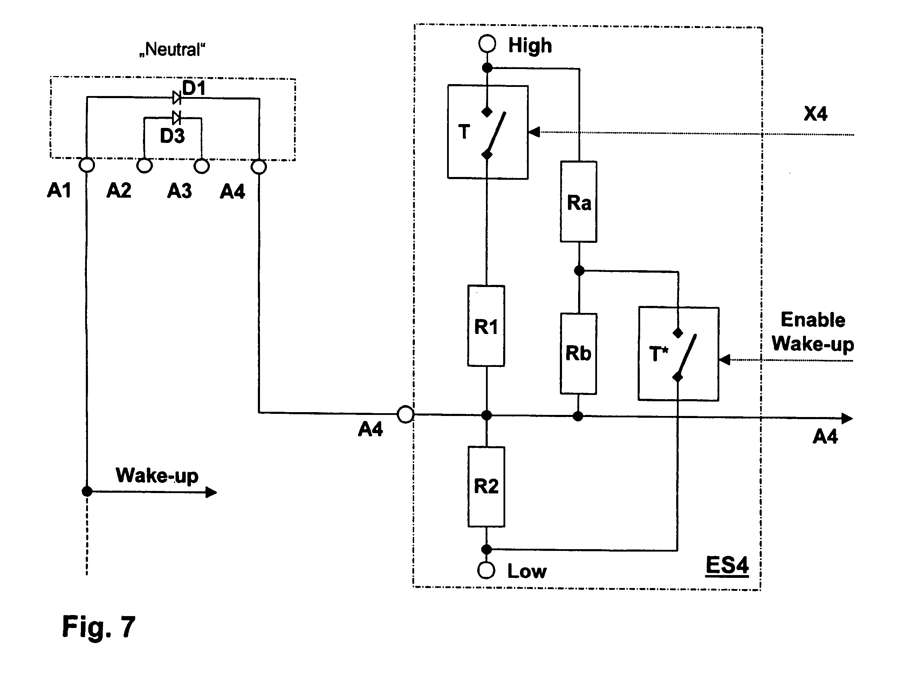

Fig. 7 zeigt eine Möglichkeit, wie eine "Wake-up"-Funktion bei einer erfindungsgemäßen Vorrichtung realisiert werden kann. Die "Wake-up" Funktion dient dazu die ECU im deaktivierten oder Bereitschafts-Zustand bei einer Betätigung des Bedienelementes B wieder zu aktivieren.

Hierzu wird das erste Ausführungsbeispiel nach Fig. 1a bis 1d betrachtet, wobei das Aktivieren der Schaltung ("Wake-up") über die Anschlüsse A1 und A4 erfolgt. Dazu ist der Eingangsschaltkreis ES4 um zwei Widerstandselemente Ra und Rb sowie ein weiteres elektronisches Schaltelement T* (Halbleiterschalter, z.B. Transistor oder Relais) erweitert. Das elektronische Schaltelement T* wird mittels eines von der ECU bereitgestellten Steuersignals "Enable Wake-up" angesteuert. Befindet sich das elektronische Schaltelement T* in seinem geöffneten Zustand, so funktioniert der Eingangsschaltkreis ES4 wie zuvor beschrieben, da Rb ein hochohmiges Widerstandselement ist. Nimmt aber das elektronische Schaltelement T* seinen geschlossenen Zustand an, so wird der Anschluss A4 über Ra, das ebenfalls ein hochohmiges Widerstandselement in der Größenordnung von Rb ist, mit dem Potential "High" verbunden. Folglich stellt sich entsprechend des Betriebszustands "Neutral" am Anschluss A4 das Potential "High" und am Anschluss A1 das Potential "Low" ein (vergleiche Fig. 1b und Fig. 4a). Wird nun der Betriebszustand "Apply" (vergleiche Fig. 1c und Fig. 4b) oder "Release" (vergleiche Fig. 1d und Fig. 4c) gewählt, wechselt am Anschluss A1 das Potential von "Low" nach "High". Dieser Potentialwechsel wird als "Wake-up" Signal abgegriffen und in der ECU ausgewertet, um diese wieder zu aktivieren. Sobald eine Wiederaktivierung der ECU erfolgt ist, wird das Steuersignal "Enable Wake-up" zurückgenommen bzw. das elektronische Schaltelement T* in seinen geöffneten Zustand überführt, damit die erfindungsgemäße Vorrichtung wieder ihrer eigentlichen Funktion dienen kann.

Die Aktivierungs-("Wake-up")-Funktion kann auch redundant ausgeführt werden, indem sie parallel auch über die Anschlüsse A2 und A3 erfolgt; d.h. der Eingangsschaltkreis ES3 wäre in gleicher Weise wie der Eingangsschaltkreis ES4 zu erweitern.

Vorteilhafte Werte für die Bemessung der Widerstandselemente können sein: Ra ~ 10K Ohm, Rb ~ 10k Ohm, R1 ~ 0,5k Ohm und R2 ~ 1k Ohm.

Abschließend sei noch angeführt, dass es selbstverständlich im Ermessen des Fachmanns liegt, an den Ausführungsbeispielen im Rahmen der Patentansprüche Abänderungen vorzunehmen, was insbesondere für die Anzahl der Schalter, die Anzahl deren Schaltstellungen sowie deren Redundanz gilt, woraus die Anzahl der für das System wählbaren Betriebszustände resultiert.

## Patentansprüche

1. Vorrichtung zum elektrischen Betätigen eines sicherheitskritischen Systems für ein elektromechanisches Feststellbremssystem eines Kraftfahrzeugs, mit wenigstens zwei Anschlüssen (A1, A4; A2, A3), wenigstens zwei Schaltern (S1, S2; S3, S4), die zwei Schaltstellungen aufweisen, einem Bedienelement (B), mittels dem wenigstens zwei Betriebszustände für das System wählbar sind, durch die Schaltstellungen der wenigstens zwei Schalter (S1, S2; S3, S4) bestimmt werden, wobei Stromrichtungselemente (D1, D2; D3, D4) vorgesehen sind,
wobei zum elektrischen Betätigen des Systems eine Vorrichtung vorgesehen ist, deren wenigstens zwei Anschlüsse (A1, A4; A2, A3) mit einer elektronischen Steuereinheit (ECU) elektrisch verbunden sind, die eine dem an dem Bedienelement (B) gewählten Betriebszustand entsprechende Steuerung bzw. Regelung des Systems vornimmt und
**dadurch gekennzeichnet,**
**dass** in jeder Schaltstellung der wenigstens zwei in Reihe geschalteten Schalter (S1, S2; S3, S4) entweder ein unidirektionaler, ein bidirektionaler oder kein Stromfluss zwischen den wenigstens zwei Anschlüssen (A1, A2; A3, A4) erfolgt, wobei zwischen den wenigstens zwei Anschlüssen (A1, A4; A2, A3) ein unidirektionaler Stromfluss für einen Betriebszustand in Richtung vom ersten zum zweiten Anschluss (A1, A4; A2, A3) durch eine Grundschaltstellung von einem ersten und einem zweiten Schalter (S1; S2; S3; S4) erfolgt, ein unidirektionaler Stromfluss für einen weiteren Betriebszustand in umgekehrter Richtung vom zweiten zum ersten Anschluss (A4, A1; A3, A2) durch eine Schaltstellungsänderung von einem der zwei Schalter (S1; S2; S3; S4) erfolgt und ein bidirektionaler oder kein Stromfluss für einen weiteren Betriebszustand zwischen dem ersten und dem zweiten Anschluss (A1 ,A2 ;A3 ,A4) durch eine weitere Schaltstellungsänderung gegenüber der Grundschaltungsstellung von einem der beiden Schalter (S1, S2; S3, S4) erfolgt, und
**dass** das System einen Auswerteschaltkreis (AS) umfasst, der an den wenigstens zwei Anschlüssen (A1, A4; A2, A3) ein vorherbestimmtes Potential einstellt, um die sich infolge dessen an den wenigstens zwei Anschlüssen (A1, A4; A2, A3) ergebenden Potentiale auszuwerten.

2. Vorrichtung nach Anspruch 1, **dadurch gekennzeichnet, dass** der wenigstens eine Schalter (S1, S2; S3, S4) wenigstens einfach redundant ausgeführt ist.

3. System nach Anspruch 1 oder 2, **dadurch gekennzeichnet, dass** das Einstellen eines vorherbestimmten Potentials an den wenigstens zwei Anschlüssen (A1, A4; A2, A3) in einem vorherbestimmten Zyklus stattfindet.

4. System nach einem der vorhergehenden Ansprüche, **dadurch gekennzeichnet, dass** das Auswerten der sich an den wenigstens zwei Anschlüssen (A1, A4; A2, A3) ergebenden Potentiale dahingehend erfolgt, ob eine Übereinstimmung mit dem an dem Bedienelement (B) gewählten Betriebszustand besteht.

## Claims

1. Device for the electrical actuation of a safety-critical system for an electromechanical parking brake system for a motor vehicle, having at least two terminals (A1, A4; A2, A3), at least two switches (S1, S2; S3, S4), which have two switching positions, an operator control element (B), by means of which at least two operating states for the system are selectable, by means of which switching positions of the at least two switches (S1, S2; S3, S4) are determined, wherein current direction elements (D1, D2; D3, D4) are provided,
- wherein a device is provided for the electrical actuation of the system, the at least two terminals (A1, A4; A2, A3) of which are electrically connected to an electronic control unit (ECU) that carries out open- and/or closed-loop control of the system in accordance with the operating state selected at the operator control element (B),
**characterized in that**
in each switching position of the at least two switches (S1, S2; S3, S4) connected in series, either a unidirectional, a bidirectional or no current flow occurs between the at least two terminals (A1, A4; A2, A3), wherein
- a unidirectional current flow between the at least two terminals (A1, A4; A2, A3) occurs for one operating state in the direction from the first to the second terminal (A1, A4; A2, A3) by means of a normal switching position of a first and a second switch (S1, S2; S3, S4),
- a unidirectional current flow occurs for a further operating state in reverse direction from the second to the first terminal (A4, A1; A3, A2) by means of a change of the switching position from one of the two switches (S1, S2; S3, S4), and
- a bidirectional or no current flow between the first and the second terminal (A1, A4; A2, A3) occurs for a further operating state by means of a further change of the switching position compared to the normal switching position from one of the two switches (S1, S2; S3, S4), and
the system comprises an evaluation circuit (AS), which at the at least two terminals (A1, A4; A2, A3) sets a predetermined potential in order to evaluate the potentials consequently arising at the at least two terminals (A1, A4; A2, A3).

2. Device according to claim 1, **characterized in that** the at least one switch (S1, S2; S3, S4) is designed with at least single redundancy.

3. System according to claim 1 or 2, **characterized in that** the setting of a predetermined potential at the at least two terminals (A1, A4; A2, A3) occurs in a predetermined cycle.

4. System according to claim 1 or 2, **characterized in that** the evaluation of the potentials arising at the at least two terminals (A1, A4; A2, A3) is effected in order to ascertain whether there is a conformity with the operating state selected at the operator control element (B).

## Revendications

1. Dispositif destiné à l'actionnement électrique d'un système critique sur le plan de la sécurité pour un système de frein de stationnement électromécanique d'un véhicule automobile, comprenant au moins deux bornes de connexion (A1, A4; A2, A3), au moins deux commutateurs (S1, S2; S3, S4) présentant deux positions de commutation, un élément de commande d'actionnement (B) au moyen duquel il est possible de sélectionner au moins deux états de fonctionnement pour le système, par lesquels des positions de commutation desdits au moins deux commutateurs (S1, S2; S3, S4) sont déterminés, des éléments directionnels pour le courant (D1, D2; D3, D4) étant prévus,
dans lequel, pour l'actionnement électrique du système, il est prévu un dispositif dont lesdites au moins deux bornes de connexion (A1, A4; A2, A3) sont reliées électriquement à une unité de commande électronique (ECU) qui produit une commande, à savoir un réglage du système correspondant à l'état de fonctionnement sélectionné au niveau de l'élément de commande d'actionnement (B), et
**caractérisé en ce que**
dans chaque position de commutation desdits au moins deux commutateurs (S1, S2; S3, S4) montés en série, un flux de courant soit unidirectionnel, soit bidirectionnel est produit ou aucun flux de courant n'est produit entre lesdites au moins deux bornes de connexion (A1, A2; A3, A4), un flux de courant unidirectionnel étant produit, pour un état de fonctionnement, entre lesdites au moins deux bornes de connexion (A1, A4; A2, A3) dans la direction de la première vers la deuxième borne de connexion (A1, A4; A2, A3) grâce à une position de commutation de base d'un premier et d'un deuxième commutateur (S1; S2; S3; S4), un flux de courant unidirectionnel étant produit, pour un autre état de fonctionnement, dans la direction inverse, de la deuxième vers la première borne de connexion (A4, A1; A3, A2), grâce à une modification de position de commutation de l'un des deux commutateurs (S1; S2; S3; S4), et un flux de courant bidirectionnel étant produit ou aucun flux de courant n'étant produit pour un autre état de fonctionnement entre la première et la deuxième borne de connexion (A1, A2; A3, A4) grâce à une autre modification de position de commutation par rapport à la position de commutation de base, de l'un des deux commutateurs (S1, S2; S3, S4), et
**en ce que** le système comprend un circuit d'évaluation (AS) qui établit, au niveau desdites au moins deux bornes de connexion (A1, A4; A2, A3), un potentiel prédéterminé, pour évaluer les potentiels qui en résultent en conséquence sur lesdites au moins deux bornes de connexion (A1, A4; A2, A3).

2. Dispositif selon la revendication 1, **caractérisé en ce que** ledit au moins un commutateur (S1, S2; S3, S4) est réalisé au moins simplement redondant.

3. Dispositif selon la revendication 1 ou la revendication 2, **caractérisé en ce que** l'établissement d'un potentiel prédéterminé au niveau desdites au moins deux bornes de connexion (A1, A4; A2, A3) se produit lors d'un cycle prédéterminé.

4. Dispositif selon l'une des revendications précédentes, **caractérisé en ce que** l'évaluation des potentiels résultants sur lesdites au moins deux bornes de connexion (A1, A4; A2, A3) s'effectue en vérifiant s'il existe une concordance avec l'état de fonctionnement sélectionné au niveau de l'élément de commande d'actionnement (B).
